# EUROPEAN PATENT APPLICATION

(11) **EP 1 672 772 A2**
(43) Date of publication of application: **21.06.2006**
(21) Application number: 05027246.7
(22) Date of filing: 13.12.2005
(51) Int. Cl.: H02K 41/03

(54) **Linear motor**

(30) Priority: 15.12.2004 JP 2004362775
(71) Applicant: FANUC LTD, Minamitsuru-gun, Yamanashi 401-0597 (JP)
(72) Inventor: Sogabe, Masatoyo, Gotenba-shi,Shizuoka 412-0043 (JP); Shimura, Yoshifumi, Fujiyoshida-shi, Yamanashi 403-0017 (JP)
(74) Representative: Thum, Bernhard

(57) **Abstract**

A linear motor (10) comprises a field portion (20) and an armature (15) arranged in predetermined spaced relation with the field portion and adapted to linearly move along the field portion. The field portion includes a plate (21), a plurality of permanent magnets (24) arranged adjacently to each other so as to arrange different polarities alternately on the plate, and mechanical fixing units (30) for fixing the permanent magnets mechanically on the plate. The permanent magnets are thus prevented from being separated under an external force which may be applied thereto. Each mechanical fixing unit each may include a cover portion (31) to cover the exposed surfaces of the permanent magnets. The mechanical fixing units are preferably formed of a non-or slightly-magnetic material.

## Description

### BACKGROUND OF THE INVENTION

### 1. Field of the Invention

This invention relates to a linear motor used, for example, to feed the table of a machine tool.

### 2. Description of the Related Art

In recent years, a linear motor, operating at high speed and quietly, has been employed as the drive unit of the spindle/table feed mechanism of a machine tool, the magnetic head drive mechanism for the magnetic head of OA equipment or the drive unit of various industrial machines. In a linear motor, permanent magnets are often used for the field portion of the linear DC motor and the linear synchronous motor so as to simplify the structure.

As disclosed in Japanese Unexamined Patent Publication No. 8-186974, a linear motor with the permanent magnet field generally includes a field portion having a plurality of permanent magnets arranged in juxtaposition on a plate, and an armature having windings arranged in predetermined spaced relation with the field portion and adapted to move linearly relative to the plurality of the permanent magnets in such a direction as to sequentially cross the magnetic fields of the permanent magnets. Those surfaces of adjacent ones of the permanent magnets which are opposed to the armatures in the direction of relative motion between the field portion and the armature are formed with alternate N and S poles. In the linear motor disclosed by Japanese Unexamined Patent Publication No 8-186974, the plate is formed of a flat plate of a magnetic material such as iron and a plurality of permanent magnets are fixed by adhesive on the flat surface thereof.

In the linear motor disclosed by Japanese Unexamined Patent Publication No 8-186974, the permanent magnets are fixed on a magnetic plate by adhesive. Even in the case where a normally expected external force is applied to the field portion, therefore, the permanent magnets are not separated from the magnetic plate. However, in the case where an extremely large external force may be applied to the field portion, the resulting impact may separate the permanent magnets from the magnetic plate.

To fabricate this field portion, on the other hand, a multiplicity of processes are required to control the bonding strength between the permanent magnets and the magnetic plate.

This invention has been achieved in view of the above situation, and the object thereof is to provide a linear motor in which the permanent magnets are prevented from being separated even when an extremely large external force is applied.

### SUMMARY OF THE INVENTION

In order to achieve the object described above, according to a first aspect of the invention, there is provided a linear motor comprising a field portion and an armature arranged in predetermined spaced relation with the field portion and adapted to move linearly along the field portion, wherein the field portion includes a plate, a plurality of permanent magnets having alternately different polarities arranged adjacently to each other on the plate and mechanical fixing members for mechanically fixing the permanent magnets on the plate.

Specifically, in the first aspect of the invention, the permanent magnets are fixed by the mechanical fixing members. Even in the case where an extremely large external force is applied, therefore, the permanent magnets are not separated from the plate. Preferably, the permanent magnets are fixed on the plate first by adhesive and then by the mechanical fixing members to increase the fixing strength.

According to a second aspect of the invention, there is provided a linear motor of the first aspect, wherein each mechanical fixing member includes a cover portion to cover the exposed surfaces of the permanent magnets.

Specifically, in the second aspect of the invention, the permanent magnets can be fixed more positively on the plate. Also, even in an environment in which a liquid, or especially, a chemical agent is used, the permanent magnets are kept out of direct contact with the liquid or the like.

According to a third aspect of the invention, there is provided a linear motor of the first or second aspect, wherein the mechanical fixing members are formed of selected one of a non-magnetic or slightly-magnetic material.

Specifically, in the third aspect, in view of the fact that the mechanical fixing members are formed of a non- or slightly-magnetic material, generation of leakage magnetic fluxes and extraneous heat is avoided. Stainless steel is preferably used as the non- or slightly-magnetic material.

All the aspects of the invention described above have the common advantage that the permanent magnets are prevented from being separated even when an extremely large external force may be applied to them.

Further, the second aspect has the advantage that the permanent magnets are kept out of direct contact with chemical agents or the like.

Furthermore, the third aspect has the advantage that generation of leakage magnetic fluxes and extraneous heat is avoided.

### BRIEF DESCRIPTION OF THE DRAWINGS

These and other objects, features and advantages of the present invention will be more apparent in light of the detailed description of exemplary embodiments thereof as illustrated by the drawings, in which:
Fig. 1 is a perspective view showing a linear motor according to this invention;
Fig. 2 is a perspective view for explaining the field yoke of the linear motor shown in Fig. 1;
Fig. 3 is a perspective view of a mechanical fixing member used for the linear motor according to the invention;
Fig. 4 is a perspective view for explaining the manner in which a mechanical fixing member is mounted on a magnetic plate;
Fig. 5 is a perspective view of the field yoke on which a plurality of the mechanical fixing members are mounted; and
Fig. 6 is a partial sectional view taken in line A-A in Fig. 5.

### DETAILED DESCRIPTION

Embodiments of the invention are described below with reference to the accompanying drawings. In the drawings, the same component members are designated by the same reference numerals, respectively. To facilitate understanding, the scale of the drawings is changed appropriately.

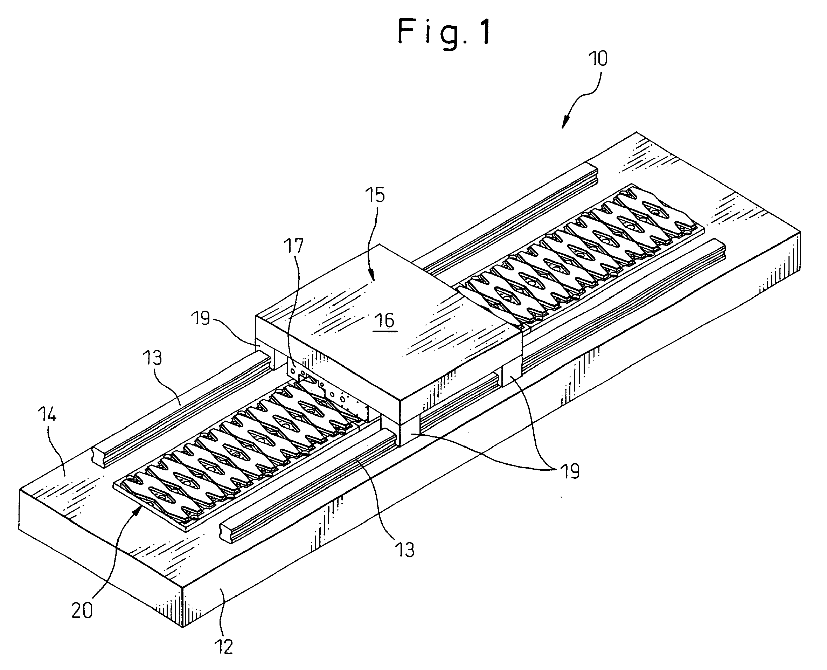

Fig. 1 is a perspective view of a linear motor according to the invention. As shown in Fig. 1, the linear motor 10 used for the machine tool or the like is a linear synchronous motor having an armature 15 as a movable member and a field yoke 20 as a stator. The field yoke 20 as the stator is arranged on the surface 4 of a base 12. Also, a guide rail 13, extending parallel to the field yoke 20, is arranged on each side of the base 12.

The armature 15 includes a substantially parallelopipedal armature core 16 formed of a stack of a plurality of thin magnetic sheets of silicon steel and a plurality of armature windings 17 accommodated in a plurality of substantially parallel slots (not shown) formed on one surface of the armature core 16. Upon generation of a moving magnetic field by, for example, a three-phase AC current in the armature windings 17, the attraction force and repulsion force acting between the moving magnetic field and the magnetic poles of the field yoke 20 applies a thrust force to the armature 15, which is thus linearly moved along the field yoke 20. As shown, slide members 19 arranged on the sides of the lower surface of the armature 15 slidably engage the guide rails 13 of the field yoke 20. During the movement of the armature 15, therefore, a predetermined gap is maintained between the armature 15 and the field yoke 20 against the vertical force exerted on the armature 15. This configuration of the armature 15 is conventionally well known, and various well-known configurations are available for use in the armature 15 according to the invention.

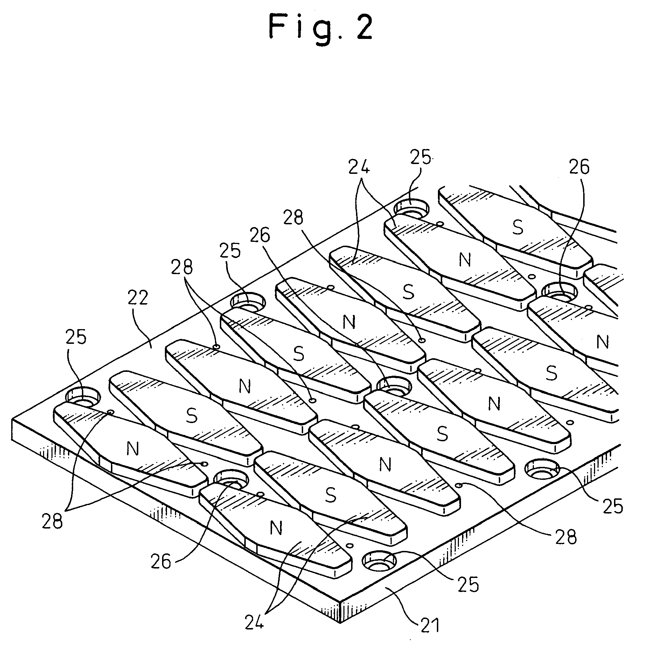

Fig. 2 is a perspective view for explaining the field yoke of the linear motor shown in Fig. 1. As shown in Fig. 2, the field yoke 20 includes a magnetic plate 21 of a magnetic material such as iron and a plurality of permanent magnets 24 juxtaposed on the surface 22 of the magnetic plate 21. In the shown embodiment, each of the permanent magnets 24 is a plate having a substantially elongated octagonal cross section. The plurality of permanent magnets 24 is aligned in two rows extending in the direction in which the armature 15 moves. The permanent magnets 24 are fixed on the surface 22 of the magnetic plate 21 by an adhesive of an epoxy resin or the like. The permanent magnets 24 may have the cross section of another shape, or may be arranged in a different number of rows along the direction in which the armature 15 moves. Further, this invention is applicable also in the case where a plurality of cavities (not shown) corresponding to the shape of the permanent magnet 24 are formed on the surface 22 of the magnetic plate 21 and the permanent magnets 24 are partially buried in the cavities.

As shown in Fig. 2, the permanent magnets 24 adjacent to each other in the direction in which the armature 15 moves are formed so that the N and S poles are arranged alternately. The permanent magnets 24 adjacent to each other along the direction in which the armature 15 moves, therefore, alternately form magnetic fluxes extending toward and away from the armature 15. The permanent magnets 24 adjacent in the direction perpendicular to the direction in which the armature 15 moves are formed with magnetic poles of the same polarity.

The surface 22 of the magnetic plate 21 is formed with a fixing means such as a plurality of through holes 25 to fix the magnetic plate 21 on the base 2 (Fig. 1) on each side of the magnetic plate 21. Similar through holes 26 are formed also between the two rows of the permanent magnets 24. As shown, the through holes 25, 26 are aligned in the direction perpendicular to the direction in which the armature 15 moves.

Further, a plurality of columns each including a plurality of apertures, such as four apertures 28 in Fig. 2 are aligned in the direction perpendicular to the direction in which the armature 15 moves. The column including these apertures 28 is formed in every other gap between the adjacent permanent magnets 24 in the direction in which the armature 15 moves. Two of the four apertures 28 are formed between the adjacent permanent magnets 24 in one of the two rows thereof, and the remaining apertures 28 are formed between the adjacent permanent magnets 24 in the other row. As shown, the apertures 28 are formed in the progressively widened gap between the sides of the permanent magnets 24 arranged adjacently to each other along the direction in which the armature 15 moves. Specifically, in the shown embodiment, the fact that the permanent magnets 24 having an elongated octagonal cross section are employed, can secure a sufficient space to form the apertures 28 between the permanent magnets 24 arranged adjacently to each other in the direction in which the armature 15 moves.

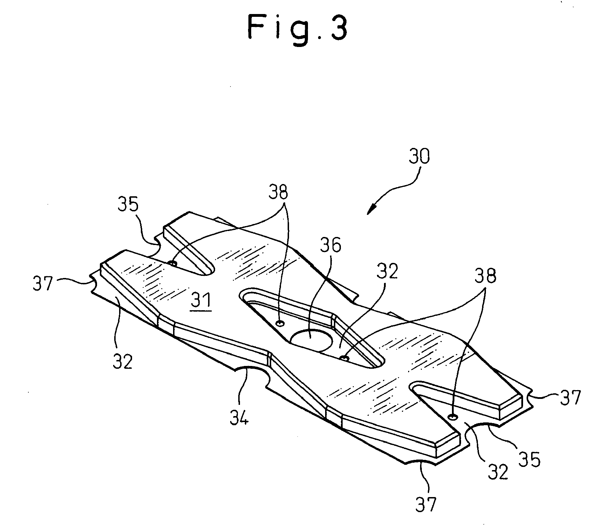

Fig. 3 is a perspective view showing a mechanical fixing member used for the linear motor according to the invention. According to the embodiment shown in Fig. 3, the shape of the mechanical fixing member 30 corresponds to the four adjacent permanent magnets 24 or, specifically, to the four permanent magnets 24 adjacent to each other in the two rows of the permanent magnets 24. The mechanical fixing member 30 functions as a cover for covering the four permanent magnets 24. In order to prevent the leakage magnetic fluxes and extraneous heat from being generated from the linear motor in operation, the mechanical fixing member 30 is formed of a non- or slightly-magnetic material such as stainless steel. Also, the mechanical fixing member 30 may alternatively be formed of a non- or slightly-magnetic material other than stainless steel such as an aluminum alloy, a copper alloy, a titanium alloy or a nickel alloy such as inconel.

Each mechanical fixing member 30 includes a cover portion 31 to cover the exposed surface of the permanent magnets 24 and a flat portion 32 in contact with the surface 22 of the magnetic plate 21. The mechanical fixing member 30, therefore, is preferably formed integrally by casting, pressing or cutting. The permanent magnets 24 arranged on the magnetic plate 21 have exposed sides and exposed upper surfaces. Each cover portion 31, therefore, can protect the exposed sides and the exposed upper surfaces of the four adjacent permanent magnets.

The flat portion 32 of the mechanical fixing member 30 is substantially rectangular and circumscribes the four adjacent permanent magnets 24, and the four corners of the flat portion 32 are formed with notches 37. Similar notches 35, 34 are formed at the center of each of the each sides of the flat portions 32 parallel and perpendicular to the direction in which the armature 15 moves. Further, the flat portion 32 located at the center of the mechanical fixing member 30 is formed with a central hole 36. The notches 34, 35, 37 and the central hole 36 have a shape corresponding to, or larger than, the through holes 25, 26 formed in the magnetic plate 21.

Further, apertures 38 are formed in the cover portion 1 between the permanent magnets 24 arranged adjacently to each other in the direction in which the armature 15 moves and corresponding to the cover portion 21. As shown, these apertures 38 are aligned along the direction perpendicular to the direction in which the armature 15 moves. The apertures 38 correspond to the apertures 28 formed in the magnetic plate 21.

As described above, the cover portion 31 and the flat portion 32 are preferably but not necessarily formed integrally with each other. Alternatively, the cover unit 31 and the flat portion 32 formed of a non- or slightly-magnetic material can be coupled to each other by welding or the like.

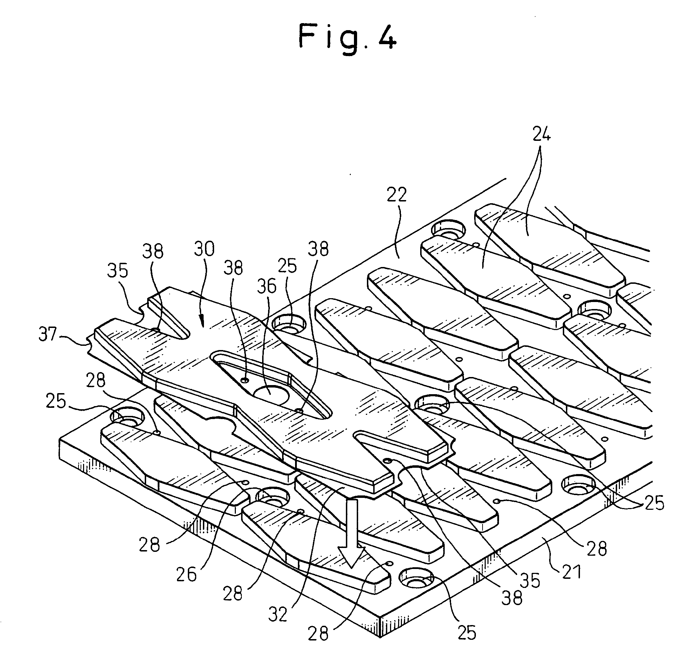

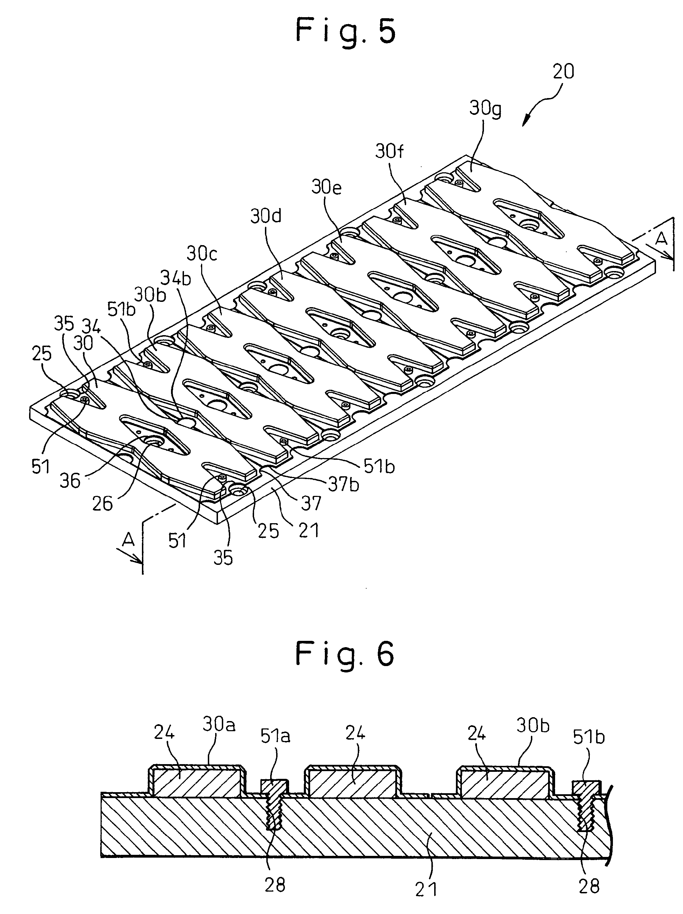

Fig. 4 is a perspective view for explaining the manner in which the mechanical fixing member 30 is mounted on the magnetic plate. As described above, a plurality of the permanent magnets 24 are arranged on the surface 22 of the magnetic plate 21 by an adhesive or the like. Then, as indicated by arrow in Fig. 4, the mechanical fixing member 30 is arranged on the four adjacent permanent magnets 24 at the end of the magnetic plate 21. As described above, the cover portion 31 of the mechanical fixing member 30 has a shape corresponding to the four adjacent permanent magnets 24 on the magnetic plate 21. Once the mechanical fixing member 30 is arranged, therefore, the exposed surfaces of the four permanent magnets 24 thus are completely covered by the cover portion 31 of the mechanical fixing member 30 (see Fig. 6 described later) on the one hand and the flat portion 32 of the mechanical fixing member 30 comes into contact with the surface 22 of the magnetic plate 21 on the other. According to this invention, therefore, even in the case where the field yoke 20 is arranged in an environment in which a liquid, and especially a chemical agent, is used, the permanent magnets 24 of the field yoke 20 are kept out of direct contact with such a liquid. Especially in such an environment, the mechanical fixing member 30 is preferably formed of stainless steel having a high corrosion resistance.

Once the mechanical fixing member 30 is arranged in position in this way, the apertures 38 of the mechanical fixing member 30 are located at positions corresponding to the apertures 28 of the magnetic plate 21. As shown in the perspective view of Fig. 5 showing the field yoke having the mechanical fixing members mounted thereon and Fig. 6 which is a partial sectional view taken in line A-A in Fig. 5, each mechanical fixing member 30 is screwed to the magnetic plate 21 by screws 51 through the apertures 28, 38. As a result, the mechanical fixing member 30 covering the permanent magnets 24 is fixed on the magnetic plate 21 by the screws 51.

Under this condition, the notches 34, 35, 37 and the central hole 36 of the mechanical fixing member 30 are located at positions corresponding to the through holes 25 on both sides and the central through hole 26 of the magnetic plate 21. In other words, the edges of the notches 34, 35, 37 and the central hole 36 are substantially coincident with the edges of the through holes 25, 26, respectively. Even after the mechanical fixing member 30 is fixed on the magnetic plate 21, therefore, the through holes 25, 26 of the magnetic plate 21 are not closed by the flat portion 32 of the mechanical fixing member 30.

Next, mechanical fixing members 30b to 30g having the same shape as the mechanical fixing member 30 are sequentially arranged adjacently to the mechanical fixing member 30 so that all the permanent magnets 24 of the magnetic plate 21 are covered by the mechanical fixing members 30, 30b to 30g. Then, the mechanical fixing members 30b to 30g are similarly screwed (see Fig. 5).

As described above, the through holes 25, 26 are not closed by the mechanical fixing members 30, 30b to 30g. Even after the mechanical fixing member 30, 30b to 30g are mounted, therefore, fixing members such as bolts can be inserted in the through holes 25, 26. In this way, according to this invention, even after the mechanical fixing member 30, etc. are mounted, the field yoke 20 can be fixed on the base 12.

In the linear motor 10 formed in the manner described above, the permanent magnets 24 are mechanically fixed and, therefore, even in the case where an extremely large external force is applied to the field yoke 20, the permanent magnets 24 are not separated from the magnetic plate 21. Also, according to this invention, the mechanical fixing members 30, etc. are formed of a non- or slightly-magnetic material, and the cover portion 31 of the mechanical fixing member 30, etc. cover all the exposed surfaces of the permanent magnets 24 while each flat portion 32 is fixed in contact with the surface 22 of the magnetic plate 21. Therefore, neither leakage magnetic fluxes nor extraneous heat is generated by the use of the mechanical fixing members 30 formed of a magnetic material.

The mechanical fixing member 30, etc. may each alternatively have a shape corresponding to not more than three or not less than five permanent magnets 24 and the apertures 28 of the magnetic plate 21 may be formed in a manner corresponding to such a shape of the mechanical fixing member 30, etc. Also, the process of fixing the permanent magnets 24 on the magnetic plate 21 only by the mechanical fixing member 30, etc. without using an adhesive is apparently included in the scope of the invention. In such a case, the fabrication time can be shortened by omitting the process to control the bonding strength between the permanent magnets 24 and the magnetic plate 21.

Although the invention has been shown and described with exemplary embodiments thereof, it will be understood, by those skilled in the art, that the foregoing and various other changes, omissions and additions may be made therein and thereto without departing from the spirit and the scope of the invention.

## Claims

1. A linear motor (10) including a field portion (20) and an armature (15) arranged in predetermined spaced relation with the field portion (20) and adapted to linearly move along the field portion (20);
**characterized in that** the field portion (20) comprises a plate (21), a plurality of permanent magnets (24) arranged adjacently to each other so as to arrange different polarities alternately on the plate (21), and a mechanical fixing means (30) for fixing the permanent magnets (24) mechanically on the plate (21).

2. A linear motor according to claim 1,
wherein each mechanical fixing means (30) includes a cover portion (31) to cover the exposed surfaces of the permanent magnets (24).

3. A linear motor according to claim 1 or 2,
wherein the mechanical fixing means (30) is formed of selected one of a non-magnetic material and a slightly-magnetic material.
